# EUROPÄISCHE PATENTSCHRIFT

(11) **EP 3 726 104 B1**
(45) Veröffentlichungstag und Bekanntmachung des Hinweises auf die Patenterteilung: **09.08.2023**
(21) Anmeldenummer: 20000149.3
(22) Anmeldetag: 14.04.2020
(51) Int. Cl.: F16J 15/3244

(54) **RADIALWELLENDICHTUNG**
RADIAL SEAL
JOINT D'ÉTANCHÉITÉ RADIAL

(30) Priorität: 18.04.2019 DE 102019002953
(43) Veröffentlichungstag der Anmeldung: 21.10.2020
(73) Patentinhaber: KACO GmbH + Co. KG, 74912 Kirchardt (DE)
(72) Erfinder: WUNDER, Wilhelm, 74360 IIsfeld (DE); REMPEL, Kostantin, 74076 Heilbronn (DE)
(74) Vertreter: Kohl, Karl-Heinz

(56) Entgegenhaltungen:
- WO-A1-2006/062929
- CN-U- 202 971 924
- JP-A- 2004 068 889
- US-A- 4 052 502
- US-A- 4 183 543
- US-A1- 2006 071 430

## Beschreibung

Die Erfindung betrifft eine Radialwellendichtung nach dem Oberbegriff des Anspruches 1.

Es sind Radialwellendichtungen in Form von Radialwellendichtringen bekannt, die zur Abdichtung von drehenden Wellen eingesetzt werden. Die Dichtlippe des Radialwellendichtringes liegt unter Radialkraft mit einem ersten umlaufenden Ring an der Welle an und dichtet gegen die Mediumsseite ab. Sollte Medium unter den ersten Ring hindurchgetreten sein, wird es durch die Rückförderelemente wieder zurück in die Mediumsseite gefördert. Die Rückförderelemente sind durch abwechselnd entgegengesetzt schräg zur Umfangsrichtung der Dichtlippe sich erstreckende Rippen gebildet, die in der Dichtlippenunterselte angeordnet sind und an denen das hindurchgetretene Medium je nach Drehrichtung der Welle zurück zum ersten Ring und unter ihm hindurch Richtung Ölseite gefördert wird. Mit dem zweiten Ring erfolgt eine Abdichtung gegen die Luftseite.

WO 2006/062929 A1 offenbart eine bekannte Radialwellendichtung.

Solche Radialwellendichtringe bereiten Probleme, wenn die Welle mit hohen Drehzahlen bzw. hohen Umfangsgeschwindigkeiten dreht. Hierunter sind Drehzahlen von wenigstens 10.000 U/min und Umfangsgeschwindigkeiten von wenigstens 25 m/s zu verstehen. Die schräg angeordneten Rippen als Rückförderelemente sind bei solchen hohen Drehzahlen für eine zuverlässige Rückförderung des unter den ersten Ring hindurchgetretenen Mediums nicht gut geeignet.

Der Erfindung liegt die Aufgabe zugrunde, die gattungsgemäße Radialwellendichtung so auszubilden, dass sie für höhere Drehzahlen sowie Umfangsgeschwindigkeiten der abzudichtenden Welle in beiden Drehrichtungen geeignet ist.

Diese Aufgabe wird bei der gattungsgemäßen Radialwellendichtung erfindungsgemäß mit den kennzeichnenden Merkmalen des Anspruches 1 gelöst.

Bei der erfindungsgemäßen Radialwellendichtung ist der zweite Ring auf seiner der Luftseite zugewandten Seite mit weiteren Rückförderelementen versehen. Sie sorgen dafür, dass eventuell unter den zweiten Ring hindurchgetretenes Medium zuverlässig wieder zurück zur Mediumsseite unter den zweiten Ring hindurch gefördert wird. In Verbindung mit den Rückförderelementen des ersten Ringes ergibt sich darüberhinaus auch eine sehr hohe Rückförderleistung der Radialwellendichtung in beide Drehrichtungen, weil die weiteren Rückförderelemente die Entstehung eines Unterdruckes (erzeugt durch die Rückförderelemente des ersten Ringes) verhindern. Die Rückförderleistung bzw. die Pumpwirkung der Radialwellendichtung wird dadurch auf ein sehr hohes Niveau gebracht. Die erfindungsgemäße Radialwellendichtung ist daher hervorragend für den Einsatz im Highspeed-Bereich geeignet, bei dem die Wellen Drehzahlen von mehr als 10.000 U/min aufweisen können, vorzugsweise Drehzahlen in einem Bereich von etwa 15.000 U/min bis etwa 50.000 U/min. Solche Drehzahlen werden bei Elektromotoren in der Automobilindustrie im Bereich der E-Mobilität erreicht bzw. angestrebt. Die abzudichtende Welle ist in solchen Fällen die Antriebswelle eines Getriebes bzw. die Rotorwelle der E-Maschine. Solche Antriebswellen weisen die hohen Drehzahlen nicht nur bei der Vorwärtsfahrt, sondern auch bei der Rückwärtsfahrt auf. Die Umfangsgeschwindigkeit im Bereich der E-Mobilität kann ein Vielfaches derjenigen betragen, wie sie bei den üblichen Getriebe- und Motorwellen von konventionell angetriebenen Fahrzeugen (Verbrennungsmotoren) auftritt. Die erfindungsgemäße Radialwellendichtung erfüllt die extremen Anforderungen in Bezug auf hohe Drehzahlen, hohe Umfangsgeschwindigkeiten und gleichzeitig wechselnde Drehrichtungen der abzudichtenden Welle. Die Radialwellendichtung gewährleistet in diesen Fällen eine einwandfreie Abdichtung zwischen der Mediums- und der Luftseite.

Die Dichtlippe der erfindungsgemäßen Radialwellendichtung besteht vorteilhaft aus elastomerem Material und liegt flächig auf der abzudichtenden Welle auf. Die Dichtlippe ist mit den Rückförderelementen des ersten und des zweiten Ringes versehen.

Um eine optimale Rückförderung des unter den ersten und den zweiten Ring hindurchgetretenen Mediums zu gewährleisten, liegen die weiteren Rückförderelemente in Umfangsrichtung vorteilhaft etwa in Höhe der Rückförderelemente des ersten Ringes.

Damit das eventuell unter den zweiten Ring hindurchgetretene Medium sicher zurückgeleitet werden kann, verlaufen die weiteren Rückförderelemente in vorteilhafter Weise in Umfangsrichtung der Dichtlippe zumindest teilweise schräg. Durch diesen schrägen Verlauf wird erreicht, dass Medium beim Drehen der abzudichtenden Welle in Richtung auf die Mediumsseite zurückgeleitet wird.

Vorteilhaft sind die weiteren Rückförderelemente sichelartig ausgebildet. Solche Rückförderelemente lassen sich einfach und kostengünstig herstellen und gewährleisten in beiden Drehrichtungen der abzudichtenden Welle eine zuverlässige Rückleitung des Mediums in Richtung auf die Mediumsseite.

Die weiteren Rückförderelemente schließen bei einer bevorzugten Ausführungsform annähernd tangential an den zweiten Ring an. Dadurch wird die Rückförderung des Mediums in vorteilhafter Weise begünstigt.

Bei einer konstruktiv einfachen Ausbildung sind die weiteren Rückförderelemente einstückig mit dem zweiten Ring ausgebildet.

Bei einer vorteilhaften Ausführungsform begrenzen die weiteren Rückförderelemente mit dem benachbarten Bereich des zweiten Ringes Druckräume. Bei der Rückförderung des unter den zweiten Ring hindurchgetretenen Mediums gelangt dieses Medium in diesen Druckraum, der sich wegen der Schräglage der Rückförderelemente zum zweiten Ring in Strömungsrichtung des zurückzufördernden Mediums verjüngt. Dadurch baut sich im jeweiligen Druckraum ein solcher Druck auf, dass der zweite Ring vom zurückzufördernden Medium geringfügig überströmt wird und sich an einer definierten Stelle ein Rückfördermechanismus einstellt.

Bevorzugt liegen die Druckräume in Umfangsrichtung der Radialwellendichtung mit Abstand hintereinander. Dadurch wird über den gesamten Umfang der Radialwellendichtung eine zuverlässige Rückförderung des Mediums gewährleistet.

Die Druckräume sind vorteilhaft an beiden Endbereichen der weiteren Rückförderelemente vorgesehen. Hierbei verjüngen sich die Druckräume der zweiten Rückförderelemente vorteilhaft in Richtung zueinander. Dadurch wird erreicht, dass je nach Drehrichtung der abzudichtenden Welle das zurückzufördernde Medium in den einen oder den anderen Druckraum gelangt. Bei einer vorteilhaften Ausgestaltung sind die weiteren Rückförderelemente durch Erhöhungen auf der der Welle zugewandten Innenseite der Dichtlippe gebildet.

Wenn die weiteren Rückförderelemente in vorteilhafter Weise spiegelsymmetrisch in Bezug auf eine zugehörige Axialebene der Radialwellendichtung ausgebildet sind, ergibt sich in beiden Drehrichtungen der abzudichtenden Welle eine optimale Rückförderung.

Die Rückförderleistung bzw. Pumpwirkung wird in vorteilhafter Weise erhöht, wenn die Rückförderelemente des ersten Ringes und die weiteren Rückförderelemente des zweiten Ringes etwa parallel zueinander verlaufen.

Bei der erfindungsgemäßen Ausbildung ist der zweite Ring auf seiner der Mediumsseite zugewandten Seite mit über seinen Umfang verteilt angeordneten Auswölbungen versehen, die sich in Richtung auf den ersten Ring erstrecken. Durch die Auswölbungen werden eventuelle Verlustströmungen gezielt und aktiv wieder den Rückförderelementen zugeführt. Die Auswölbungen haben somit die Funktion von Leitrippen, welche das Medium zu den Rückförderelementen leiten.

Damit über den Umfang der Dichtlippe die Rückführung des Mediums sichergestellt ist, sind in vorteilhafter Weise die Auswölbungen und die Einwölbungen in Umfangsrichtung der Dichtlippe abwechselnd angeordnet.

Die freien Enden der Rückförderelemente des ersten Ringes haben vorteilhaft geringen Abstand von den Auswölbungen. Zwischen den Rückförderelementen des ersten Ringes und der entsprechenden Seitenwand der Auswölbungen werden dadurch kleine Rückführspalte gebildet, über die das Medium zu den Rückförderelementen des ersten Ringes geleitet werden kann.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in der Zeichnung dargestellten Ausführungsbeispieles näher erläutert. Es zeigen
- Fig. 1: in Ansicht eine erfindungsgemäße Radialwellendichtung,
- Fig. 2: einen Schnitt längs der Linie A-A in Fig. 1,
- Fig. 3: in vergrößerter Darstellung den Ausschnitt F in Fig. 2,
- Fig. 4: in vergrößerter Darstellung den Ausschnitt B in Fig. 2,
- Fig. 5: in vergrößerter Darstellung den Ausschnitt D in Fig. 2,
- Fig. 6: in vergrößerter Darstellung den Ausschnitt E in Fig. 2,
- Fig. 7: in vergrößerter Darstellung den Ausschnitt H in Fig. 2,
- Fig. 8: einen Schnitt längs der Linie C-C in Fig. 4,
- Fig. 9: in vergrößerter Darstellung einen Schnitt längs der Linie G-G in Fig. 3.

Die anhand eines Ausführungsbeispieles nachfolgend beschriebene Radialwellendichtung ist als Radialwellendichtring ausgebildet. Er wird insbesondere für Wellen eingesetzt, an die im Einsatz extreme Anforderungen in Bezug auf hohe Drehzahlen, hohe Umfangsgeschwindigkeiten und wechselnde Drehrichtungen gestellt werden. Solche Anforderungen werden insbesondere im Bereich der E-Mobilität von der Automobilindustrie gestellt. Hier werden Elektromotoren eingesetzt, deren Wellen Drehzahlen von mehr als 10.000 U/min haben können. Für zukünftige Aggregate werden bereits Drehzahlen im Bereich von etwa 15.000 bis etwa 50.000 U/min angestrebt. Sind die Wellen solcher Elektromotoren Antriebswellen von Getrieben, so werden die hohen Drehzahlen nicht nur bei der Vorwärtsfahrt, sondern auch bei der Rückwärtsfahrt gefordert. Der nachfolgend beschriebene Radialwellendichtring erfüllt diese Anforderungen.

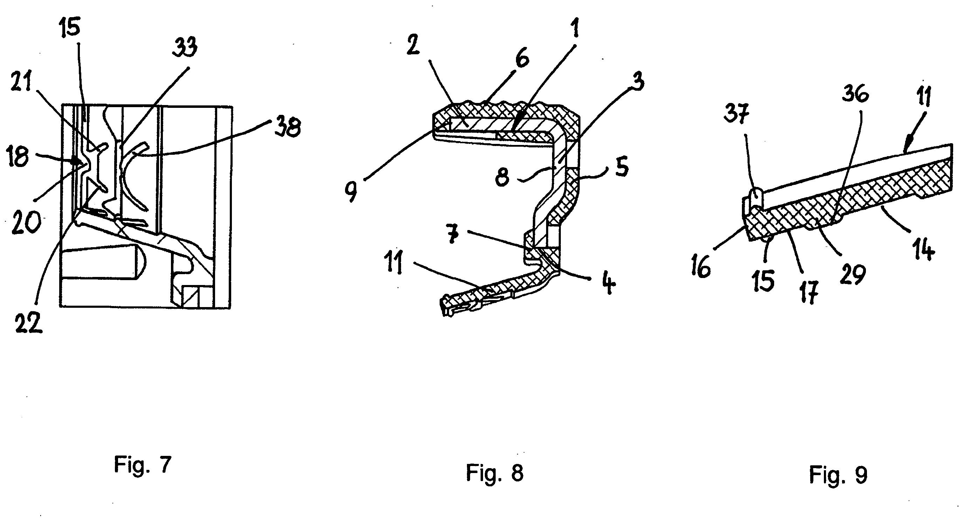

Der Radialwellendichtring hat ein ringförmiges Gehäuse 1 mit L-förmigem Querschnitt. Es hat einen zylindrischen Mantel 2 (Fig. 8), der an einem Ende in einen radial nach innen gerichteten Boden 3 übergeht. Er ist zentrisch mit einer Durchtrittsöffnung 4 für die abzudichtende Welle versehen. Das Gehäuse kann aus metallischem Werkstoff, aber auch aus einem harten Kunststoff bestehen.

Der Boden 3 ist an seiner Außenseite mit einer Abdeckung 5 versehen, die auch den Mantel 2 an seiner radialen Außenseite vollständig oder teilweise bedeckt. Der den Mantel 2 bedeckende Teil der Abdeckung 5 bildet in der Einbaulage eine statische Abdichtung des Radialwellendichtringes. Vorteilhaft ist der den Mantel 2 bedeckende Teil der Abdeckung 5 mit einer Profilierung 6 versehen, die über den Mantel 2 übersteht und beim Einsetzen des Radialwellendichtringes in einen Aufnahmeraum elastisch zusammengedrückt wird. Dadurch wird eine einwandfreie statische Abdichtung sichergestellt. Der Mantel 2 des Gehäuses 1 sitzt mit Presssitz im Einbauraum für den Radialwellendichtring.

Die Abdeckung 5 umgibt auch den Rand 7 der Durchtrittsöffnung 4 und erstreckt sich über einen Teil der Innenseite 8 des Gehäusebodens 3. Außerdem bedeckt die Abdeckung 5 vorteilhaft auch die Stirnseite 9 des Mantels 2.

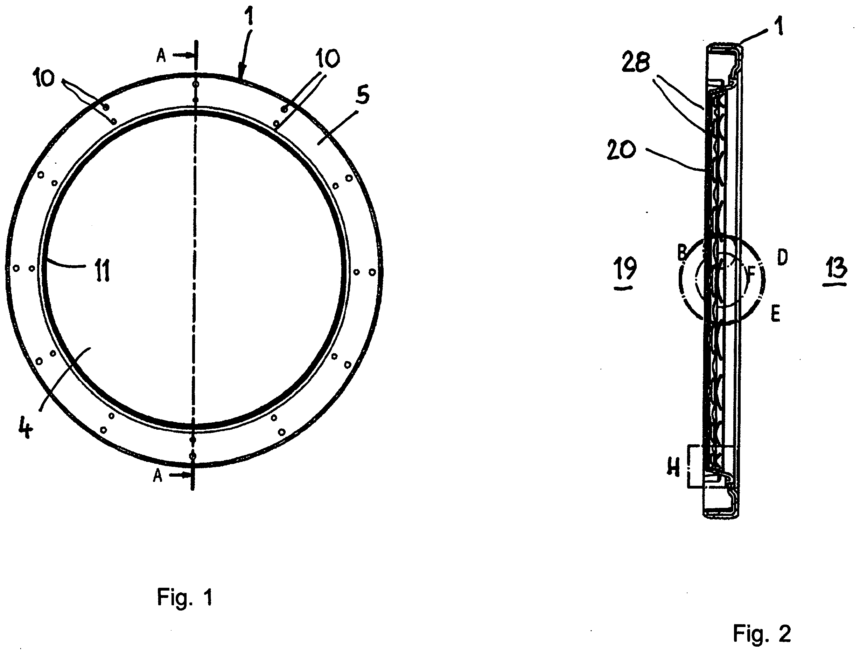

Die Abdeckung 5 ist in geeigneter Weise fest mit dem Gehäuse 1 verbunden, beispielsweise mit einem entsprechenden Bindesystem. So kann die Verbindung mittels eines Klebemittels erfolgen. Bei einem elastomeren Werkstoff kann die Abdeckung 5 an das Gehäuse 1 anvulkanisiert werden. Vorteilhaft ist es, wenn die Abdeckung 5 auf der Außenseite des Gehäusebodens 3 zusätzlich noch formschlüssig mit dem Boden 3 verbunden ist. Die Abdeckung 5 ist an ihrer Außenseite mit über ihren Umfang verteilt angeordneten Aussparungen 10 versehen (Fig. 1), die vorteilhaft längs zweier Ringe verteilt über den Umfang des Gehäusebodens 3 vorhanden sind.

Der Radialwellendichtring ist mit einer aus elastomerem Material bestehenden Dichtlippe 11 versehen, die in der Einbaulage unter elastischer Verformung mit einer definierten Vorspannung auf der abzudichtenden Welle aufliegt. Die Dichtlippe 11 ist vorteilhaft einstückig mit der Abdeckung 5 ausgebildet und erstreckt sich über den Innenumfang des Gehäuses 1. Grundsätzlich ist es möglich, die Abdeckung 5 und die Dichtlippe 11 als getrennte Teile vorzusehen. Dies hat den Vorteil, dass die Dichtlippe 11 aus einem anderen Material hergestellt werden kann als die Abdeckung 5.

Der Radialwellendichtring kann mit einer (nicht dargestellten) Schutzlippe versehen sein, die ebenfalls vorteilhaft einstückig mit der Abdeckung 5 und damit auch mit der Dichtlippe 11 ausgebildet ist. Die Schutzlippe befindet sich dann auf der Luftseite 13 (Fig. 2) des Radialwellendichtringes und verhindert einen Zutritt von Schmutzteilchen und dergleichen an die Dichtlippe 11.

In der Einbaulage liegt die Dichtlippe 11 unter elastischer Verformung flächig auf der rotierenden Welle auf. Um die Reibung und damit den Verschleiß gering zu halten, ist die Flächenpressung bzw. die spezifische Radialkraft, unter welcher die Dichtlippe 11 an der Welle anliegt, sehr gering und liegt beispielsweise in der Größenordnung von etwa 0,01 bis 0,3 N/mm.

Die der abzudichtenden Welle zugewandte Innenseite 14 (Fig. 9) der Dichtlippe 11 ist mit einer Struktur versehen, die im Folgenden im Einzelnen erläutert werden wird.

Am freien Rand ist an der Innenseite 14 der Dichtlippe 11 ein umlaufender Ring 15 vorgesehen, der durch eine im Axialschnitt etwa halbkreisförmige Erhöhung an der Innenseite 14 gebildet wird. Der Ring 15 hat geringen Abstand von der Stirnseite 16 der Dichtlippe 11.

An den umlaufenden Ring 15 schließt an der von der Stirnseite 16 der Dichtlippe 11 abgewandten Seite eine Mantelfläche 17 an (Fig. 9), in der sich Rückfördereinheiten 18 befinden, die dafür sorgen, dass von der Mediumsseite 19 (Fig. 2) des Radialwellendichtringes unter die Dichtlippe 11 gelangendes Medium, in der Regel Öl, wieder zurück auf die Mediumsseite 19 gefördert wird.

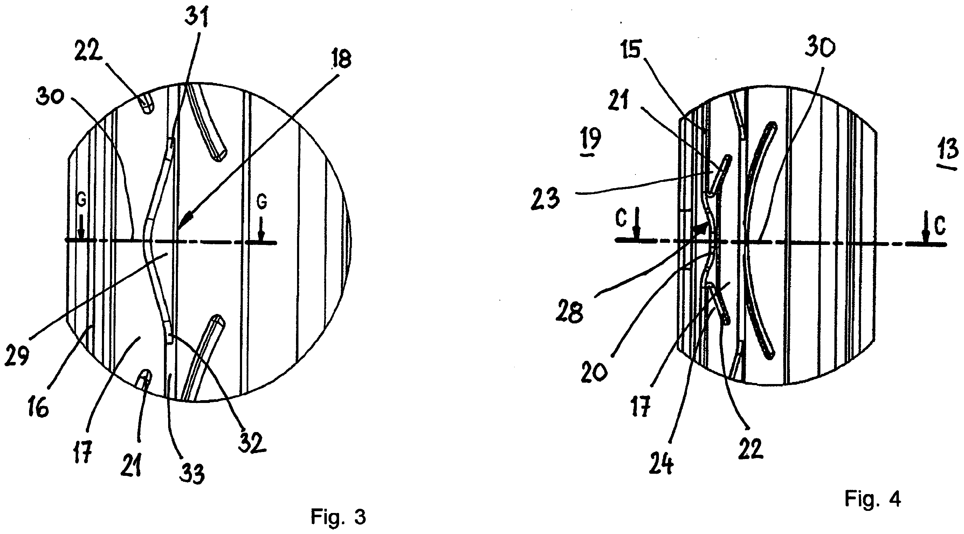

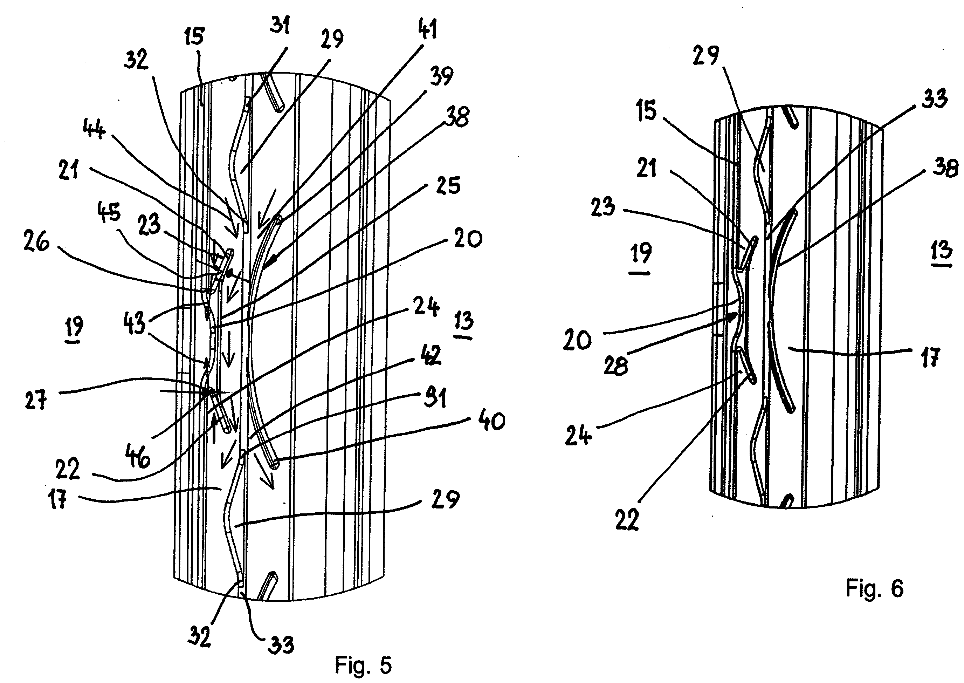

Der Ring 15 weist mit Abstand voneinander liegende, sichelförmige Einwölbungen bildende Abschnitte 20 auf, die in Richtung auf die Luftseite 13 gekrümmt verlaufen (Fig. 4, 5 und 6). Die Abschnitte 20 sind jeweils spiegelsymmetrisch zur zugehörigen Axialebene ausgebildet, wie aus Fig. 6 hervorgeht. Die Abschnitte 20 sind einstückig mit dem Ring 15 ausgebildet, haben jedoch kleinere Breite als der Ring 15 (Fig. 5 und 6).

Die Abschnitte 20 können über ihre gesamte Umfangslänge stetig gekrümmt verlaufen. Es ist aber auch möglich, dass die Abschnitte 20 in halber Länge einen geraden Mittelabschnitt aufweisen. Je nach Ausbildung der bogenförmigen Abschnitte 20 kann Einfluss auf die Rückförderqualität der Rückfördereinheiten 18 genommen werden.

In dem Bereich, in dem die beiden Enden der Abschnitte 20 in den Ring 15 übergehen, erstrecken sich entgegengesetzt zueinander verlaufende Rückförderelemente 21, 22, die in Umfangsrichtung der Dichtlippe 11 winklig verlaufen. Die Abschnitte 20 und die Rückförderelemente 21, 22 bilden die Rückfördereinheiten 18.

Die Abschnitte 20 und die Rückförderelemente 21, 22 sind wie der Ring 15 durch Erhöhungen gebildet, die auf der Innenseite 14 über die Mantelfläche 17 der Dichtlippe 11 vorstehen. Die Rückförderelemente 21, 22 liegen spitzwinklig zu den benachbarten Bereichen des Ringes 15, mit denen sie in Draufsicht gemäß den Fig. 4 bis 6 V-förmige Druckräume 23, 24 begrenzen. Sie verjüngen sich in Umfangsrichtung in Richtung auf den bogenförmigen Abschnitt 20, der sich zwischen den beiden Druckräumen 23, 24 erstreckt. Die Rückförderelemente 21, 22 gehen bogenförmig gekrümmt in den mediumsseitigen Ring 15 über.

Wie Fig. 5 zeigt, sind die Rückförderelemente 21, 22 durch eine schmale Rippe 25 miteinander verbunden. Sie erstreckt sich in Umfangsrichtung und parallel zum mediumsseitigen Ring 15. Vorteilhaft ist die Rippe 25 einstückig mit den Rückförderelementen 21, 22 ausgebildet.

Der bogenförmige Abschnitt 20 ist so vorgesehen, dass er in halber Länge den kleinsten Abstand von der Rippe 25 hat.

Über den Umfang der Dichtlippe 11 sind die bogenförmigen Abschnitte 20 gleichmäßig verteilt angeordnet (Fig. 2). An die Abschnitte 20 schließen in der beschriebenen Weise jeweils die Rückförderelemente 21, 22 an, die mit den benachbarten Bereichen des mediumsseitigen Ringes 15 die Druckräume 23, 24 begrenzen. Die abgerundeten Spitzen 26, 27 der Druckräume 23, 24 an beiden Enden des Abschnittes 20 sind gegeneinander gerichtet.

Die Rückfördereinheit 18 und die Rippe 25 bilden eine Rückfördereinrichtung 28. Dementsprechend sind über den Umfang der Dichtlippe 11 mit Abstand hintereinander mehrere solcher Rückfördereinrichtungen 28 vorgesehen.

Im Bereich zwischen benachbarten Rückfördereinrichtungen 28 befindet sich eine erhabene Leitrippe 29, die an der Innenseite 14 der Dichtlippe 11 vorgesehen ist und vorteilhaft gleiche Höhe wie der mediumsseitige Ring 15 hat. Die Leitrippe 29 erstreckt sich in Umfangsrichtung der Dichtlippe 11 und verbreitert sich von ihren beiden Enden aus. Vorteilhaft ist die Leitrippe 29 in Bezug auf ihre Quermittelebene 30 spiegelsymmetrisch ausgebildet (Fig. 3).

Die Leitrippe 29 weist über ihre Länge Abstand vom mediumsseitigen Ring 15 auf. Entsprechend der Formgestaltung der Leitrippe 29 ist ihr Abstand vom Ring 15 in halber Länge am geringsten, während er im Bereich der beiden in Umfangsrichtung liegenden Enden am größten ist.

Die beiden Enden 31, 32 liegen etwa in Höhe der freien Enden der Rückförderelemente 21, 22 der benachbarten Rückfördereinheiten 18. Die freien Enden der Rückförderelemente 21, 22 haben geringen Abstand von den Enden 31, 32 der Leitrippe 29.

Zwischen den in Umfangsrichtung benachbarten Rückfördereinrichtungen 28 ist jeweils eine solche Leitrippe 29 angeordnet. Sie wird jeweils durch eine Auswölbung eines Ringes 33 gebildet, der an der Innenseite 14 der Dichtlippe 11 vorgesehen ist und koaxial zum mediumsseitigen Ring 15 verläuft. Zwischen den Ringen 15 und 33 befinden sich die Rückfördereinrichtungen 28.

Der Ring 33, der eine gekrümmte Außenseite haben kann, gewährleistet im statischen Zustand, wenn die abzudichtende Welle nicht dreht, die Dichtfunktion.

Die Ringe 15, 33, die Rückfördereinheiten 18 und die Leitrippen 29 haben bevorzugt gleiche Höhe (Fig. 9). Dadurch ist sichergestellt, dass die Mediumsseite 19 durch den Ring 15 einwandfrei abgedichtet werden kann. Dennoch unter den Ring 15 hindurchgetretenes Medium wird von den Rückfördereinrichtungen 28 und den Leitrippen 29 zuverlässig zurückgefördert. Der Ring 33, der in der Einbaulage dichtend auf der Welle aufliegt, verhindert, dass von der Mediumsseite 19 aus Medium zur Luftseite 13 gelangen kann.

Im Unterschied zu den Ringen 15, 33 hat die Leitrippe 29 eine ebene Stirnseite 36 (Fig. 9). Da die Rückfördereinrichtungen 28 und die Leitrippen 29, in der Projektion auf die Zeichnungsebene gesehen (Fig. 4), symmetrisch zur jeweiligen Mittelebene 30 ausgebildet sind, wirken sie in beiden Drehrichtungen optimal. Das unter die Dichtlippe 11 gelangte Medium wird somit unabhängig von der Drehrichtung der Welle zuverlässig zur Mediumsseite 19 zurückgefördert.

Die Abschnitte 20 bis 22 sowie die Rippe 25 haben über ihre Länge jeweils etwa konstante axiale Breite (Fig. 5). Dadurch ergibt sich eine gleichmäßige Rückförderung des Mediums in beiden Drehrichtungen der Welle.

Die Höhe der Abschnitte 20 kann konstant sein. Es ist auch möglich, diese Abschnitte 20 so auszubilden, dass ihre Höhe von beiden Enden aus stetig zunimmt, so dass die Abschnitte 20 in halber Länge ihre größte Höhe haben.

Der mediumsseitige Ring 15 hat geringen Abstand von der Stirnseite 16 der Dichtlippe 11. In der Einbaulage liegt die Stirnseite 16 etwa rechtwinklig zur Oberseite der Welle. Etwa in Höhe des mediumsseitigen Ringes 15 ist auf der Oberseite der Dichtlippe 11 ein umlaufender vorstehender Ring 37 vorgesehen (Fig. 9). Er hat vorteilhaft eine gekrümmte Oberseite. Im Axialschnitt (Fig. 9) ist der Ring 37 etwa halbkreisförmig ausgebildet. Der Ring 37 kann zu einer Optimierung der Anpresskraftverteilung und/oder der Höhe der Anpresskraft der Dichtlippe 11 beitragen.

Im dargestellten und beschriebenen Ausführungsbeispiel sind die Rückfördereinheiten 18 sowie die Leitrippe 29 symmetrisch zur Quermittelebene 30 ausgebildet. Es ist grundsätzlich auch möglich, die Rückfördereinrichtungen 28 abweichend vom dargestellten bevorzugten Ausführungsbeispiel asymmetrisch auszubilden. Eine solche Gestaltung bietet sich an, wenn die abzudichtende Welle im Einsatz eine Hauptdrehrichtung aufweist. Dann können die Rückfördereinrichtungen 28 und die Leitrippen 29 so gestaltet sein, dass in dieser Hauptdrehrichtung eine optimale Rückförderwirkung des unter die Dichtlippe 11 gelangenden Mediums erreicht wird. Wenn die Welle dann in die andere Richtung dreht, reicht in diesem Falle die Rückförderwirkung der asymmetrisch ausgebildeten Rückfördereinrichtungen 28 und Leitrippen 29 aus.

Auf der der Luftseite 13 zugewandten Seite des Ringes 33 befinden sich weitere Rückförderelemente 38, die im Ausführungsbeispiel Sichelform haben und vorteilhaft einstückig mit dem Ring 33 ausgebildet sind. Die Rückförderelemente 38 befinden sich, in Umfangsrichtung gesehen, jeweils in Höhe der Abschnitte 20 des mediumsseitigen Ringes 15. Die Rückförderelemente 38 schließen etwa tangential an die der Luftseite 13 zugewandten Seite des Ringes 33 an (Fig. 5).

Wie sich aus Fig. 5 ergibt, sind die Rückförderelemente 38 stetig gekrümmt und schließen in halber Länge an den Ring 33 an. Die beiden Enden 39, 40 liegen etwa in Höhe der Enden 31, 32 der in Umfangsrichtung benachbarten Leitrippen 29.

Die sichelartigen Rückförderelemente 38 erhöhen die Rückförderleistung der Radialwellendichtung auch bei wechselnder Drehbewegung der Welle.

Die Rückförderelemente 38 müssen nicht sichelartig ausgebildet sein, sondern können auch in Form von Drallstegen gestaltet sein, die eine in Umfangsrichtung der Radialwellendichtung wechselnde Schräglage aufweisen.

Die Rückförderelemente 38 befinden sich im luftseitigen Bereich der auf der Welle aufliegenden Dichtlippe 11 und stehen in einem besonderen Winkel zur Welle im eingebauten Zustand, der bis etwa 60° betragen kann.

Die Zahl der Rückförderelemente 38 ergibt sich bevorzugt aus der Zahl der auf der Mediumsseite befindlichen Rückfördereinheiten 18 bzw. Rückfördereinrichtungen 28. Sie befinden sich im vorderen Bereich der auf der Welle aufliegenden Dichtlippe 11.

Zwischen den Enden 39, 40 der Rückförderelemente 38 und den benachbarten Enden 31, 32 der Leitrippen 29 werden Durchströmbereiche 41, 42 gebildet, durch die das Medium in noch zu beschreibender Weise strömen kann.

Die Durchströmbereiche 41, 42 verjüngen sich jeweils in Richtung auf den Ring 33.

Da die Rückförderelemente 38 nahezu in Verlängerung zu den Rückfördereinheiten 18 bzw. Rückfördereinrichtungen 28 angeordnet sind, in axialer Richtung gesehen, ergibt sich durch die Rückförderelemente 38 eine zusätzliche aktive Rückförderung des Mediums, wodurch die Pumpwirkung der Radialwellendichtung gesteigert und auf ein sehr hohes Niveau gebracht wird. Dadurch ist die Radialwellendichtung hervorragend im Highspeed-Bereich einsetzbar.

Um beispielsweise im Betrieb bei sehr hoher Drehzahl möglicherweise auftretende Geräusche zu minimieren, kann die Länge der Rückförderelemente 21, 22 und/oder der Rückförderelemente 38 variiert werden. Die Radialwellendichtung zeichnet sich daher im Einsatz durch eine hervorragende Geräuscharmut aus. Zudem ist die Radialwellendichtung konstruktiv einfach im Aufbau und kann kostengünstig gefertigt werden.

Es ist weiter möglich, die Rückfördereinrichtungen 28 und/oder die Rückförderelemente 38 in Umfangsrichtung der Dichtlippe 11 so anzuordnen, dass sie unmittelbar aneinander anschließen und nicht, wie im dargestellten Ausführungsbeispiel, geringen umfangsseitigen Abstand voneinander haben.

In den Druckräumen 23, 24 entsteht beim Einsatz der Radialwellendichtung durch das unter den Ring 15 hindurchgetretene abzudichtende Medium eine hydrodynamische Strömung in Richtung der in Fig. 5 eingezeichneten Pfeile. Da sich die Druckräume 23, 24 in Strömungsrichtung verjüngen, wird in den Druckräumen 23, 24 ein Druck erzeugt, der dazu führt, dass der Ring 15 im Bereich dieser Druckräume kurzzeitig von der Welle abheben kann, so dass das abzudichtende Medium aus den Druckräumen 23, 24 den Ring 15 überströmt und zurück auf die Mediumsseite 19 strömen kann. Diese Rückförderung zurück zur Mediumsseite 19 im Bereich der Druckräume 23, 24 ist in Fig. 5 durch die Strömungspfeile 43 veranschaulicht.

Das unter den Ring 15 hindurchtretende Medium strömt in Umfangsrichtung längs der Strömungspfeile 44 (Fig. 5) längs der Leitrippen 29 und des mediumsseitigen Ringes 33. Wie Fig. 5 zeigt, strömt dieser Teil des Mediums im Bereich zwischen dem Ring 33 und den Rippen 25. Die Rückförderelemente 21, 22, die in der Ansicht gemäß Fig. 5 winklig zum Ring 33 verlaufen, enden mit Abstand vom Ring 33, so dass das Medium zwischen den Rückförderelementen 21, 22 und dem Ring 33 hindurchströmen kann.

Das unter den Ring 33 hindurchgetretene Medium wird in den Durchströmbereichen 41, 42 abgefangen und unter den Ring 33 wieder zurück in Richtung auf die Mediumsseite 19 geleitet.

Durch eine Verbreiterung des Bereiches 45 der Rückförderelemente 21, 22 im Vergleich zum Bereich 46 am Übergang der Rückförderelemente 21, 22 in den Ring 15 (Fig. 5) kann der typischen Anpresskraftverteilung von Manschettendichtungen entgegengewirkt werden. Dies hat zur Folge, dass eine Verlustströmung in Richtung auf den Ring 33 einen höheren Widerstand erfährt als die Rückförderung des Mediums in Richtung der Strömungspfeile 43.

Die Verbreiterung 46 ist am Übergang von den Rückförderelementen 21, 22 in die Abschnitte 20 vorgesehen. In Bezug auf die beiden Verbreiterungen 45, 46 wird ausdrücklich auf Fig. 5 verwiesen, in der diese Verhältnisse schematisch dargestellt sind.

Die beschriebene Radialwellendichtung zeichnet sich dadurch aus, dass die Dichtlippe 11 am mediumsseitigen Rand mit dem umlaufenden Ring 15 versehen ist, der über den Umfang gleichmäßig verteilt die Abschnitte 20 aufweist. Sie bilden sogenannte Einzüge, die zur Luftseite 13 hinweisen. Die wechseldrallähnlichen Rückförderelemente in Form der Abschnitte 21, 22 sind zu den Einzügen 20 zentriert angeordnet. Die Abschnitte 20 münden etwa tangential in den Ring 15. Der der Luftseite 13 zugewandte Ring 33 dient zur Sicherung der statischen Abdichtung. Die an der Luftseite des Ringes 33 befindlichen Rückförderelemente 38 sind ebenfalls über den Umfang der Radialwellendichtung gleichmäßig verteilt angeordnet und liegen jeweils in Höhe der Rückfördereinrichtungen 28. Die Rückförderelemente 38 sorgen dafür, dass das unter den Ring 15 und unter den Ring 33 hindurchgetretene Medium wieder zurück auf die Mediumsseite 19 gefördert wird. Das Zusammenspiel der Rückfördereinrichtungen 28 mit den Rückförderelementen 38 führt zu einer optimalen aktiven Rückförderung des Mediums und damit zu einer sehr hohen Pumpwirkung der Radialwellendichtung.

Die Leitrippen 29 sind ebenfalls über den Umfang der Radialwellendichtung verteilt angeordnet. Ihre Zahl entspricht der Zahl der Abschnitte 20. Die Abschnitte 20 und die Leitrippen 29 sind, in Radialrichtung gemäß Fig. 5 gesehen, entgegengesetzt zueinander gekrümmt verlaufend ausgebildet und in Umfangsrichtung der Radialwellendichtung abwechselnd vorgesehen.

Die Leitrippen 29 bilden Auswölbungen und stellen sicher, dass das an einem der Rückförderelemente 21, 22 nicht zurückgeförderte Medium aktiv zum benachbarten Rückförderelement 21, 22 geleitet wird. Diese zusätzliche aktive Zuführung des Mediums zu den Rückförderelementen 21, 22 steigert die Rückförderung auf die Mediumsseite 19.

Der Ring 15 mit den als Einwölbungen ausgebildeten Abschnitten 20 verringert die Störung der Strömungsrichtung des abzudichtenden Mediums. Aufgrund der Trägheit des Mediums wird somit die Verlustströmung verringert. Erreicht wird dies u.a. dadurch, dass die durch den engsten Spalt des durch die Druckräume 23, 24 gebildeten doppeltkonvergenten Spaltes vorgegebene Strömungsrichtung des Mediums so vorgegeben wird, dass das Medium der Umfangsrichtung folgend auf die Mediumsseite 19 ohne aktive Umlenkung gelangt.

Darüber hinaus wird die Kontaktfläche im Bereich der potentiellen Verlustströmung vergrößert. Dadurch wird es einem eventuell vorhandenen Leckagemedium erschwert, sich über die Rückförderelemente 21, 22 hinweg in Richtung auf die Luftseite 13 bewegen zu können. Die am Ring 33 befindlichen Auswölbungen in Form der Leitrippen 29 führen eventuelle Verlustströmungen gezielt und aktiv wieder den Rückförderelementen 21, 22 zu.

Eventuell unter den Ring 33 gelangendes Medium wird durch die luftseitigen Rückförderelemente 38 zuverlässig in Richtung auf die Mediumsseite 19 gefördert. Die Durchströmbereiche 41, in die das Medium einströmt, bilden Druckräume, die sich in Strömungsrichtung verjüngen. Dadurch wird ein Druck erzeugt, der dazu führt, dass der Ring 33 im Bereich dieser Druckräume 41 kurzzeitig von der Welle abheben kann, so dass das abzudichtende Medium unter dem Ring 33 zurück auf die Mediumsseite 19 strömen kann.

Bei einer anderen Drehrichtung der Welle bilden die Durchströmbereiche 42 die Druckräume, die sich in Strömungsrichtung des Mediums verjüngen. Der dadurch erzeugte Druck führt dann ebenfalls dazu, dass der Ring 33 im Bereich dieser Druckräume 42 kurzzeitig von der Welle abhebt und dem Medium ermöglicht, zurück zur Mediumsseite 19 zu strömen.

Die Radialwellendichtung kann bei allen schnelldrehenden Anwendungen und wechselnden Drehrichtungen einer Welle eingesetzt werden. Die abzudichtende Welle kann hohe Drehzahlen sowie entsprechend hohe Umfangsgeschwindigkeiten aufweisen. Wechselnde Drehrichtungen zwischen der Mediumsseite 19 und der Luftseite 13 werden zuverlässig abgedichtet. Ein Hauptanwendungsgebiet ist der Einsatz im Highspeed-Bereich, vorzugsweise in der E-Mobilität bei der Abdichtung von Getriebe- oder Motorwellen. Hier können die Drehzahlen der Welle beispielsweise im Bereich von 10.000 U/min bis etwa 50.000 U/min liegen.

Die Radialwellendichtung kann grundsätzlich auch bei niedrigen Drehzahlen eingesetzt werden. Selbst im Bereich der Anlaufdrehzahl gewährleistet die Radialwellendichtung eine einwandfreie Abdichtwirkung.

Die Radialwellendichtung kann abweichend vom dargestellten Ausführungsbeispiel auch so gestaltet sein, dass sie beispielsweise in einen Dichtflansch integriert ist. In diesem Fall benötigt die Radialwellendichtung kein eigenes Gehäuse. Die Dichtlippe kann an den Dichtflansch beispielsweise angeklebt, anvulkanisiert oder in anderer geeigneter Weise angebunden sein.

## Patentansprüche

1. Radialwellendichtung mit wenigstens einer Dichtlippe (11) aus elastomerem Material, die an ihrer der abzudichtenden Welle zugewandten Innenseite (14) einen ersten umlaufenden Ring (15), der in der Einbaulage dichtend an der Welle anliegt und gegen die Mediumsseite (19) abdichtet, über den Umfang der Dichtlippe (11) angeordnete Rückförderelemente (21, 22), die an der der Luftseite (13) zugewandten Seite des ersten Ringes (15) vorgesehen sind und Leckagemedium unabhängig von der Drehrichtung der Welle zur Mediumsseite (19) hin fördern, und wenigstens einen zweiten umlaufenden Ring (33) aufweist, der an der der Luftseite (13) zugewandten Seite des ersten Ringes (15) vorgesehen ist und auf seiner Luftseite (13) weitere Rückförderelemente (38) aufweist,
**dadurch gekennzeichnet, dass** der zweite Ring (33) auf seiner der Mediumsseite (19) zugewandten Seite mit über seinen Umfang verteilt angeordneten Auswölbungen (29) versehen ist, die sich in Richtung auf den ersten Ring (15) erstrecken.

2. Radialwellendichtung nach Anspruch 1,
**dadurch gekennzeichnet, dass** die weiteren, vorteilhaft sichelartig ausgebildeten Rückförderelemente (38) in Umfangsrichtung etwa in Höhe der Rückförderelemente (21, 22) des ersten Ringes (15) liegen.

3. Radialwellendichtung nach Anspruch 1 oder 2,
**dadurch gekennzeichnet, dass** die weiteren Rückförderelemente (38) in Umfangsrichtung der Dichtlippe (11) zumindest teilweise schräg verlaufen.

4. Radialwellendichtung nach einem der Ansprüche 1 bis 3,
**dadurch gekennzeichnet, dass** die weiteren Rückförderelemente (38) annähernd tangential an den zweiten Ring (33) anschließen, mit dem sie vorteilhaft einstückig ausgebildet sind.

5. Radialwellendichtung nach einem der Ansprüche 1 bis 4,
**dadurch gekennzeichnet, dass** die weiteren Rückförderelemente (38) mit dem benachbarten Bereich des zweiten Ringes (33) Druckräume (41, 42) begrenzen.

6. Radialwellendichtung nach Anspruch 5,
**dadurch gekennzeichnet, dass** die Druckräume (41, 42) in Umfangsrichtung der Radialwellendichtung mit Abstand hintereinander liegen.

7. Radialwellendichtung nach Anspruch 5 oder 6,
**dadurch gekennzeichnet, dass** sich die Druckräume (41, 42) der weiteren Rückförderelemente (38) in Richtung zueinander verjüngen.

8. Radialwellendichtung nach einem der Ansprüche 1 bis 7,
**dadurch gekennzeichnet, dass** die weiteren Rückförderelemente (38) Erhöhungen auf der der Welle zugewandten Innenseite (14) der Dichtlippe (11) sind.

9. Radialwellendichtung nach einem der Ansprüche 1 bis 8,
**dadurch gekennzeichnet, dass** die weiteren Rückförderelemente (38) spiegelsymmetrisch in Bezug auf eine zugehörige Axialebene (30) der Radialwellendichtung ausgebildet sind.

10. Radialwellendichtung nach einem der Ansprüche 1 bis 9,
**dadurch gekennzeichnet, dass** die weiteren Rückförderelemente (38) und die Rückförderelemente (21, 22) des ersten Ringes (15) in axialer Richtung Abstand voneinander haben.

11. Radialwellendichtung nach einem der Ansprüche 1 bis 10,
**dadurch gekennzeichnet, dass** die Rückförderelemente (21, 22) des ersten Ringes (15) und die weiteren Rückförderelemente (38) des zweiten Ringes (33) etwa parallel zueinander verlaufen.

12. Radialwellendichtung nach einem der Ansprüche 1 bis 11,
**dadurch gekennzeichnet, dass** der erste Ring (15) über seinen Umfang verteilt angeordnete Einwölbungen (20) aufweist, die sich in Richtung auf den zweiten Ring (33) erstrecken und etwa zwischen benachbarten Rückförderelementen (21, 22) des ersten Ringes (15) liegen.

13. Radialwellendichtung nach Anspruch 12,
**dadurch gekennzeichnet, dass** die Auswölbungen (29) und die Einwölbungen (20) in Umfangsrichtung der Dichtlippe (11) abwechselnd angeordnet sind.

14. Radialwellendichtung nach einem der Ansprüche 1 bis 13,
**dadurch gekennzeichnet, dass** die freien Enden der Rückförderelemente (21, 22) des ersten Ringes (15) geringen Abstand von den Auswölbungen (29) haben.

## Claims

1. Radial shaft seal with at least one sealing lip (11) of elastomeric material, which on its inner side (14) facing the shaft to be sealed has a first circumferential ring (15), which in the installation position rests against the shaft and seals against the medium side (19), return elements (21, 22) arranged over the circumference of the sealing lip (11), which are provided on the side of the first ring (15) facing the air side (13) and convey leakage medium towards the medium side (19) independently of the direction of rotation of the shaft, and at least one second circulating ring (33) which is provided on the side of the first ring (15) facing the air side (13) and has further return elements (38) on its air side (13), **characterised in that** the second ring (33) is provided on its side facing the medium side (19) with bulges (29) which are arranged distributed over its circumference and extend in the direction of the first ring (15).

2. Radial shaft seal according to claim 1,
**characterised in that** the further, advantageously sickle-shaped return elements (38) lie in the circumferential direction approximately at the level of the return elements (21, 22) of the first ring (15).

3. Radial shaft seal according to claim 1 or 2,
**characterised in that** the further return elements (38) extend at least partially at a slant relative to the circumferential direction of the sealing lip (11).

4. Radial shaft seal according to one of the claims 1 to 3,
**characterised in that** the further return elements (38) adjoin the second ring (33) approximately tangentially, with which they are advantageously formed integrally.

5. Radial shaft seal according to one of the claims 1 to 4,
**characterised in that** the further return elements (38) delimit pressure chambers (41, 42) with the adjacent region of the second ring (33).

6. Radial shaft seal according to claim 5,
**characterised in that** the pressure chambers (41, 42) are positioned at a spacing one after the other in the circumferential direction of the radial shaft seal.

7. Radial shaft seal according to claim 5 or 6,
**characterised in that** the pressure chambers (41, 42) of the further return elements (38) taper in a direction toward each other.

8. Radial shaft seal according to one of the claims 1 to 7,
**characterised in that** the further return elements (38) are elevations on the inner side (14) of the sealing lip (11) facing the shaft.

9. Radial shaft seal according to one of the claims 1 to 8,
**characterised in that** the further return elements (38) are formed mirror-symmetrical relative to an associated axial plane (30) of the radial shaft seal.

10. Radial shaft seal according to one of the claims 1 to 9,
**characterised in that** the further return elements (38) and the return elements (21, 22) of the first ring (15) are spaced apart from each other in the axial direction.

11. Radial shaft seal according to one of the claims 1 to 10,
**characterised in that** the return elements (21, 22) of the first ring (15) and the further return elements (38) of the second ring (33) extend approximately parallel to one another.

12. Radial shaft seal according to one of the claims 1 to 11,
**characterised in that** the first ring (15) has indentations (20) distributed over its circumference, which extend in the direction of the second ring (33) and lie approximately between adjacent return elements (21, 22) of the first ring (15).

13. Radial shaft seal according to claim 12,
**characterised in that** the protrusions (29) and the indentations (20) are arranged alternately in the circumferential direction of the sealing lip (11).

14. Radial shaft seal according to one of the claims 1 to 13,
**characterised in that** the free ends of the return elements (21, 22) of the first ring (15) have a small spacing from the protrusions (29).

## Revendications

1. Joint d'étanchéité radial avec au moins une lèvre d'étanchéité (11) en matériau élastomère, qui présente sur sa face intérieur (14) tournée vers l'arbre à étancher une première bague périphérique (15), qui, en position de montage, assure l'étanchéité par rapport à l'arbre et le côté médium (19), des éléments de retour (21, 22) disposés sur la périphérie de la lèvre d'étanchéité (11), qui sont prévus sur le côté de la première bague (15) tourné vers le côté air (13) et qui transportent le fluide de fuite vers le côté fluide (19) indépendamment du sens de rotation de l'arbre, et au moins une deuxième bague périphérique (33) qui est prévue sur le côté de la première bague (15) tourné vers le côté air (13) et qui présente d'autres éléments de retour (38) sur son côté air (13),
**caractérisé en ce que** le deuxième bague (33) est prévu sur son côté faisant face au côté de milieu (19) avec de renflements (29) qui sont disposés répartis sur sa circonférence et s'étendent dans la direction de la première bague (15).

2. Joint d'étanchéité radial selon la revendication 1,
**caractérisé en ce que** les autres éléments de retour (38), avantageusement en forme de croissant, se trouvent dans la direction circonférentielle approximativement à la hauteur des éléments de retour (21, 22) de la première bague (15).

3. Joint d'étanchéité radial selon la revendication 1 ou 2,
**caractérisé en ce que** les autres éléments de retour (38) se trouvent dans la direction circonférentielle de la lèvre d'étanchéité (11) est au moins partiellement oblique.

4. Joint d'étanchéité radial selon l'une des revendications 1 à 3,
**caractérisé en ce que** les autres éléments de retour (38) se raccordent approximativement tangentiellement à la deuxième bague (33), avec laquelle ils sont avantageusement formés d'un seul tenant.

5. Joint d'étanchéité radial selon l'une des revendications 1 à 4, **caractérisé en ce que** les autres éléments de retour (38) délimitent des espaces de pression (41, 42) avec la zone adjacente de la deuxième bague (33).

6. Joint d'étanchéité radial selon la revendication 5,
**caractérisé en ce que** les espaces de pression (41, 42) sont situés à distance les uns derrière les autres dans la direction circonférentielle du joint d'étanchéité radial.

7. Joint d'étanchéité radial selon la revendication 5 ou 6,
**caractérisé en ce que** les chambres de pression (41, 42) des autres éléments de retour (38) s'effilent l'une vers l'autre.

8. Joint d'étanchéité radial selon l'une des revendications 1 à 7, **caractérisé en ce que** les autres éléments de retour (38) sont des élévations sur la face intérieure (14) de la lèvre d'étanchéité (11) tournée vers l'arbre.

9. Joint d'étanchéité radial selon l'une des revendications 1 à 8, **caractérisé en ce que** les autres éléments de retour (38) sont formés de manière symétrique par rapport à un plan axial associé (30) du joint d'étanchéité radial.

10. Joint d'étanchéité radial selon l'une des revendications 1 à 9, **caractérisé en ce que** les autres éléments de retour (38) et les éléments de retour (21, 22) de la première bague (15) sont espacés dans la direction axiale.

11. Joint d'étanchéité radial selon l'une des revendications 1 à 10, **caractérisé en ce que** les éléments de retour (21, 22) de la première bague (15) et les autres éléments de retour (38) de la deuxième bague (33) s'étendent approximativement parallèlement les uns aux autres.

12. Joint d'étanchéité radial selon l'une des revendications 1 à 11, **caractérisé en ce que** la première bague (15) présente des entailles (20) réparties sur sa circonférence, qui s'étendent en direction de la deuxième bague (33) et se situent approximativement entre des éléments de retour (21, 22) voisins de la première bague (15).

13. Joint d'étanchéité radial selon la revendication 12,
**caractérisé en ce que** les renflements (29) et les indentations (20) sont disposées en alternativement dans la direction circonférentielle de la lèvre d'étanchéité (11).

14. Joint d'étanchéité radial selon l'une des revendications 1 à 13, **caractérisé en ce que** les extrémités libres des éléments de retour (21, 22) de la première bague (15) sont à faible distance des renflements (29).
